# EUROPEAN PATENT APPLICATION

(11) **EP 1 755 120 A1**
(43) Date of publication of application: **21.02.2007**
(21) Application number: 05739263.1
(22) Date of filing: 11.05.2005
(51) Int. Cl.: G11B 17/04

(54) **OPTICAL DISK DEVICE**

(30) Priority: 17.05.2004 JP 2004146549; 17.05.2004 JP 2004146558
(71) Applicant: MATSUSHITA ELECTRIC INDUSTRIAL CO., LTD., Kadoma-shi, Osaka 571-8501 (JP)
(72) Inventor: HASEGAWA, Kazunori, Matsushita Elec. Ind. Co.,Ltd., 1-chome,Chuo-ku,Osaka-shi,Osaka 540-6319 (JP); NAKAYAMA, Tsukasa, Matsushita Elec. Ind. Co.,Ltd., 1-chome,Chuo-ku,Osaka-shi,Osaka 540-6319 (JP); NISHIDA, Hiroto, Matsushita Elec. Ind. Co.,Ltd., 1-chome,Chuo-ku,Osaka-shi,Osaka 540-6319 (JP); NAKADE, Isamu, Matsushita Elec. Ind. Co.,Ltd., 1-chome,Chuo-ku,Osaka-shi,Osaka 540-6319 (JP)
(74) Representative: Pautex Schneider, Nicole Véronique
(86) International application number: PCT/JP2005/008606
(87) International publication number: WO 2005/112025

(57) **Abstract**

An object is to provide an optical disc device which has a simple mechanism for identifying the kind and insertion state of an optical disc so that the optical disc can be ejected when there is abnormality. When storage of an optical disc 12 in which information has been recorded is started, a pair of rollers 14 and 14 rotate while holding the optical disc 12 inserted through an insertion/ejection slot 11 of a body 13 of an optical disc device 10, so that the rollers 14 and 14 convey the optical disc 12 to the inside of the body 13. On this occasion, circumferential edge sensing units 20 provided in the inside of the body 13 sense a circumferential edge 12a of the inserted optical disc 12 continuously to thereby sense the outer diameter, shape and insertion state of the inserted optical disc 12. The optical disc 12 is ejected when decision is made that there is abnormality.

## Description

### Technical Field

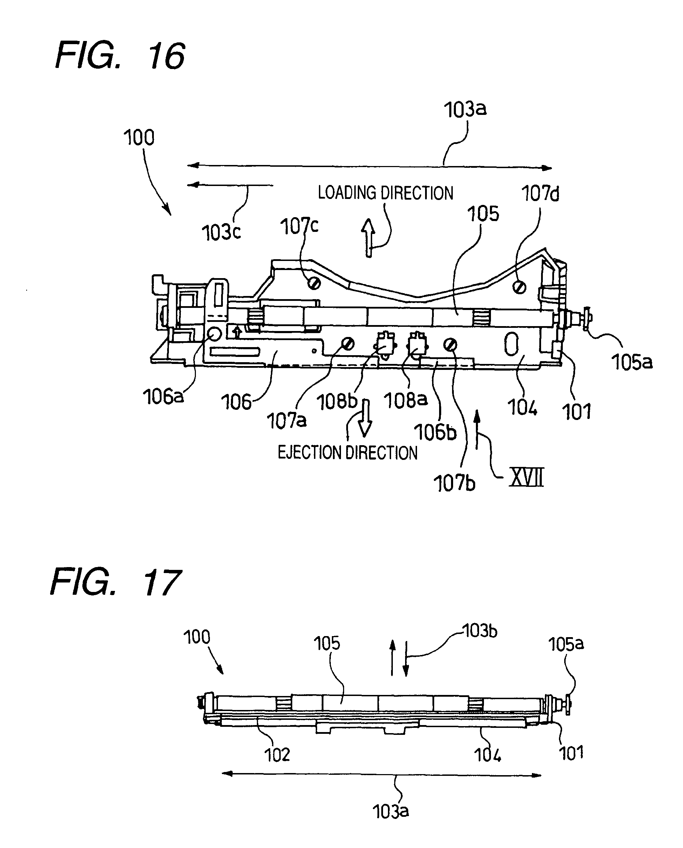

As shown in Figs. 16 and 17, an optical disc device 100 according to the background art has a pedestal 101 provided with an optical disc guide member 104 for forming an insertion path for an inserted optical disc 102 while limiting movement of the optical disc 102 in widthwise directions (arrows 103a) substantially perpendicular to passing directions (i.e. a loading direction and an ejecting direction) of the optical disc 102.
There is further provided a roller 105 which is urged downward (arrow 103b) with respect to the inserted optical disc 102 so that the optical disc 102 can be conveyed so as to be loaded and ejected when the roller 105 coming into contact with the optical disc 102 transmits motive power to the optical disc 102. There is further provided a motive power source which is not shown but engages with a gear 105a provided in the roller 105 to rotate the roller 105 (e.g. see Patent Document 1).

In the optical disc device 100, a lever member 106 is provided in the roller 105 side with respect to the optical disc guide member 104. The lever member 106 has a shaft portion 106a which comes into contact with an outer circumference of the optical disc 102 when the optical disc 102 is inserted.
In addition, a plurality of light-receiving devices 107a, 107b, 107c and 107d and bush switches 108a and 108b are provided. Each of the bush switches 108a and 108b detects displacement of the lever member 106 when the bush switch comes into contact with a protrusion 106b provided in the lever member 106.

The bush switch 108b is provided in a position to detect the maximum displacement of the lever member 106 in a direction of an arrow 103c so that the bush switch 108b can detect a 12cm optical disc 102. The bush switch 108b can also detect a transparent optical disc.
Light-emitting devices not shown but provided for emitting detection light are disposed opposite to the light-receiving devices 107a, 107b, 107c and 107d respectively so that the passing optical disc 102 is detected when the detection light is blocked by the optical disc 102.

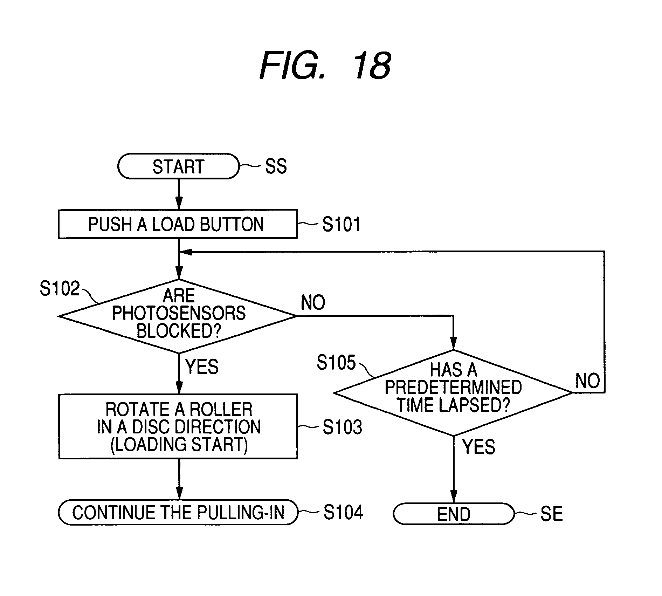

Accordingly, as shown in Fig. 18, in the aforementioned optical disc device 100, a load button (not shown) for loading an optical disc 102 is pushed (step S101) after start (step SS) to indicate an optical disc 102 loading operation, and then the optical disc 102 is inserted.
Judgment is made as to whether any one of the light-receiving devices 107a, 107b, 107c and 107d senses the optical disc 102 or not (step S102). When the optical disc 102 is sensed, the roller 105 starts to rotate in a conveyance direction (step S103) to thereby pull the optical disc 102 in (step S104).
On the other hand, when the optical disc is not sensed in the step S102, judgment is made as to whether a predetermined time has elapsed or not (step S105). When the predetermined time has not elapsed, the routine of process goes back to the step S102 to continue sensing of the optical disc 102. When the predetermined time has elapsed, the pulling-in operation is terminated (step SE) on the basis of a decision that no optical disc 102 is inserted.
Patent Document 1: JP-A-2003-248995 (Fig. 1 and Fig. 2)

### Disclosure of the Invention

### Problem that the invention is to Solve

The optical disc device 100 according to the background art is however very complicated because the lever member 106 and the light-receiving devices 107a, 107b, 107c and 107d are combined to detect various optical discs (or the like) such as an ordinary 12cm optical disc, a transparent optical disc, an adaptor used for an 8cm optical disc, etc.

Further, the aforementioned optical disc device 100 has a problem that the cost of the optical disc device 100 increases because expensive light-receiving devices 107a, 107b, 107c and 107d are used.
In addition, there is another problem that conveyance of the optical disc 102 will be delayed when the roller 105 for insertion/ejection starts to rotate only after the light-receiving devices 107a, 107b, 107c and 107d sense the optical disc 102 as in the background art, or there is another problem that a burden will be imposed on the roller 105 or the optical disc 102 when the roller 105 starts to rotate only after the optical disc 102 comes into contact with the roller 105.

### Means for Solving the Problem

The invention has been developed in order to solve the problem pertinent to the background art. An object of the invention is to provide an optical disc device having a simple mechanism for identifying the kind and insertion state of an optical disc so that the optical disc can be ejected when the optical disc is abnormal.
The invention has been developed in order to solve the problem pertinent to the background art. Another object of the invention is to provide an optical disc device which can prevent a burden from being imposed on rollers or an optical disc while reduction in cost is attained.

The optical disc device according to the invention is an optical disc device including: a body in the inside of which an optical disc can be stored; an insertion/ejection slot through which the optical disc can be inserted/ejected into/from the inside of the body; and rollers which are provided in the inside of the body and which rotate while holding the optical disc so that the rollers can convey the optical disc to the inside of the body, wherein: circumferential edge sensing units which sense a circumferential edge of the optical disc are provided in the inside of the body.

According to this configuration, when loading of an optical disc is started, the pair of rollers rotate while holding the optical disc inserted through the insertion/ejection slot of the body of the optical disc device, so that the rollers convey the optical disc to the inside of the body. On this occasion, the circumferential edge sensing unit provided in the inside of the body sense a circumferential edge of the inserted optical disc continuously so that the circumferential edge sensing unit can sense the outer diameter, shape and insertion state of the inserted optical disc.

The optical disc device according to the invention has a configuration in which the circumferential edge sensing unit are disposed between the insertion/ejection slot and a center of a storage position where the optical disc is stored in the inside of the body.

According to the configuration, a diameter portion of an inserted optical disc surely passes a space ranging from the insertion/ejection slot to the center of a reproducing position, so that the diameter of the optical disc can be detected surely by the circumferential edge sensing unit provided between the insertion/ejection slot and the center of the reproducing position.

The optical disc device according to the invention has a configuration in which the circumferential edge sensing unit are mechanical sensors which can come into contact with the circumferential edge of the optical disc.

According to the configuration, the circumferential edge sensing unit sense a circumferential edge of an optical disc when sensor elements of the mechanical sensors come into contact with the circumferential edge of the optical disc directly. Thus, the size of the optical disc can be surely detected by use of inexpensive mechanical sensors. Examples of each mechanical sensor may include a rotary sensor which performs detection continuously by means of rotating a sensor element, a slide type sensor which moves linearly to perform detection continuously.

The optical disc device according to the invention has a configuration in which a pair of the circumferential edge sensing units are provided in a direction crossing an insertion/ejection direction of the optical disc.

According to this configuration, the pair of circumferential edge sensing units are disposed in both (left and right) sides in a direction crossing an insertion/ejection of an inserted optical disc so that the circumferential edge sensing unit can surely come into contact with a circumferential edge of the optical disc surely when the optical disc is conveyed. When sensing is performed from the two (left and right) sides, the circumferential edge sensing unit short in detection stroke can be used, so that reduction in the size of the device can be achieved.

The optical disc device according to the invention has a configuration in which the circumferential edge sensing unit have pivot type position transducers which have pivots disposed substantially perpendicularly to a disc surface of the stored optical disc, and arms which are provided in the pivot type position transducers so that the arms can come into contact with the circumferential edge of the optical disc.

According to this configuration, as the circumferential edge sensing unit for sensing a circumferential edge of an optical disc, the pivots of the pivot type position transducers are provided perpendicularly to the optical disc surface, so that the arms rotating on the pivots come into contact with the circumferential edge of the optical disc so as to be pivoted above a surface parallel to the optical disc surface. For this reason, quantities of rotation of the arms are detected on the basis of outputs from the pivot type position transducers in accordance with the quantities of rotation of the arms, so that the outer diameter, shape, etc. of the optical disc can be sensed.

The optical disc device according to the invention has a configuration in which the circumferential edge sensing unit have the pivots rotated while bendable portions provided in the arms coming into contact with the circumferential edge of the optical disc are bent.

According to this configuration, when the arms rotate while front ends of the arms come into contact with the circumferential edge of the optical disc, the arms are bent in the bendable portions so that rotation of the arms can be performed in a narrow space. For this reason, the circumferential edge sensing devices can be made compact.

The optical disc device according to the invention has a configuration in which the circumferential edge sensing unit have linear type position transducers which can slide substantially perpendicularly to an insertion/ejection direction of the optical disc to be inserted/ejected, and arms which are provided in the linear type position transducers so that the arms can come into contact with the circumferential edge of the optical disc.

According to this configuration, the linear type position transducers make linearly reciprocating motion in the condition that front ends of the arms of the linear type position transducers come into contact with a circumferential edge of an optical disc, so that the position, interval, etc. of the circumferential edge of the optical disc is detected. Thus, the outer diameter, shape, etc. of the optical disc can be sensed in accordance with moving quantities and positions of the arms.

According to the invention, it is possible to provide an optical disc device in which a circumferential edge sensing unit for sensing a circumferential edge of an optical disc are provided in the inside of a body so that there is an effect that the outer diameter, shape and insertion state of an inserted optical disc can be sensed.

The optical disc device according to the invention is an optical disc device including: a body in the inside of which optical discs can be loaded and laminated; an insertion/ejection slot through which each of the optical discs can be inserted/ejected into/from the inside of the body; rollers which are provided in the inside of the body and which rotate so as to convey each of the optical discs to the inside of the body; and a loading start operation means for starting a loading operation to load each of the optical discs into the inside of the body sequentially, wherein the rollers start to rotate as soon as the loading start means is operated.

According to the configuration, when an optical disc loading operation is started by the loading start operation means so as to insert each of optical discs and load the optical disc stratiformly in the inside of the body, the rollers start to rotate so as to permit loading of the optical disc. Then, each optical disc is inserted through the insertion/ejection slot so that the optical disc loading operation is performed sequentially.
Thus, because it is not necessary to provide expensive photosensors for sensing an inserted optical disc as in the background art, the cost of the optical disc device can be reduced.
Insertion of a transparent optical disc can be also permitted. Since the rollers for insertion/ejection are rotated before insertion of an optical disc, rapid insertion/loading can be performed and a burden imposed on the rollers or the optical disc can be lightened, compared with the case where the rollers start to rotate only after the optical disc is sensed.

The optical disc device according to the invention has a configuration in which the rollers are installed in a front portion in the inside of the body.

According to the configuration, the rollers for inserting/ejecting an optical disc are provided in the front portion of the body so that a portion in front of the rollers can be made smaller so that the optical disc device as a whole can be made more compact.

### Effect of the invention

According to the invention, the rollers for insertion/ejection start to rotate as soon as the loading start means is operated. Accordingly, without necessity of provision of expensive photosensors for sensing an inserted optical disc as in the background art, it is possible to provide an optical disc device having an effect that the cost of the optical disc device can be reduced.
Since no photosensor is used, insertion of a transparent optical disc can be also permitted. Further, since the rollers for insertion/ejection are rotated before insertion of an optical disc, rapid insertion/loading can be achieved and a burden imposed on the rollers or the optical disc can be lightened, compared with the case where the rollers start to rotate only after the optical disc is sensed.

### Brief Description of the Drawings

[Fig. 1] An overall perspective view of a car audio apparatus having a built-in optical disc device according to a first embodiment of the invention.
[Fig. 2] A plan view showing an optical disc insertion waiting state before an optical disc is inserted to a reproducing position.
[Fig. 3] A plan view showing a state in which a maximum diameter in an optical disc with an outer diameter of 12cm is detected.
[Fig. 4] A plan view showing a state in which the optical disc is pulled into the reproducing position normally and the pulling-in is completed.
[Fig. 5] A plan view showing a state in which an 8cm optical disc is inserted.
[Fig. 6] A plan view showing a state in which insertion of a 12cm optical disc is incomplete.
[Fig. 7] A plan view showing a state in which an optical disc having a defect in its outer shape is inserted.
[Fig. 8] A plan view showing a state in which two optical discs are inserted.
[Fig. 9] A flow chart of an optical disc shape detection operation.
[Fig. 10] (A) is a plan view of an example of an optical disc device using linear type position transducers, showing a state in the middle of insertion of a 12cm optical disc, and (B) is a front view from a B direction in (A).
[Fig. 11] (A) is a plan view of the example of the optical disc device using the linear type position transducers, showing a state in which the maximum diameter of a 12cm optical disc is detected, and (B) is a front view from a B direction in (A).
[Fig. 12] A plan view showing a state in the middle of insertion of an 8cm optical disc.
[Fig. 13] An overall perspective view of a car audio apparatus having a built-in optical disc device according to a second embodiment of the invention.
[Fig. 14] A plan view showing a state in which an optical disc is pulled into a reproducing/toading position completely.
[Fig. 15] A flow chart showing a procedure of an optical disc insertion operation in the optical disc device according to the invention.
[Fig. 16] A plan view of important part of an optical disc device according to the background art.
[Fig. 17] A front view from an XVII direction in Fig. 16.
[Fig. 18] A flow chart showing a procedure of an optical disc insertion operation in the optical disc device according to the background art.

### Description of Reference Numerals

- 6: loading button (loading start operation means)
- 10, 210: optical disc device
- 11,211: insertion/ejection slot
- 12, 212: optical disc
- 12a: circumferential edge
- 12b: optical disc surface
- 13,213: body
- 14, 214: insertion/ejection roller (roller)
- 20: circumferential edge sensing unit
- 22a: pivot
- 22L, 22R: pivot type position transducer (mechanical sensor)
- 23b: hinge (bendable portion)
- 23L, 23R: arm
- 26L, 26R: linear type position transducer (mechanical sensor)
- 27L, 27R: arm

### Best Mode for Carrying Out the Invention

An optical disc device according to a first embodiment of the invention will be described below with reference to the drawings.

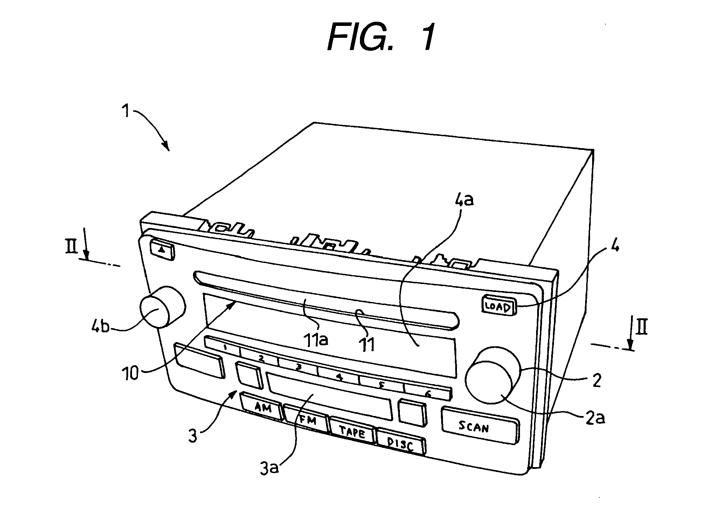

Fig. 1 shows an overall perspective view of a car audio apparatus 1 having a built-in optical disc device 10 according to the first embodiment of the invention. A radio set 2, a cassette tape player 3, etc., as well as the optical disc device 10, are built in this car audio apparatus 1. In a front panel 4, an optical disc insertion/ejection slot 11 in the optical disc device 10, a radio tuning knob 2a, a cassette insertion slot 3a, etc., are provided in addition to a display portion 4a and a power/volume knob 4b used in common to all functions. A control portion 5 for controlling the radio set 2, the cassette tape player 3, the optical disc device 10, etc., is provided internally.

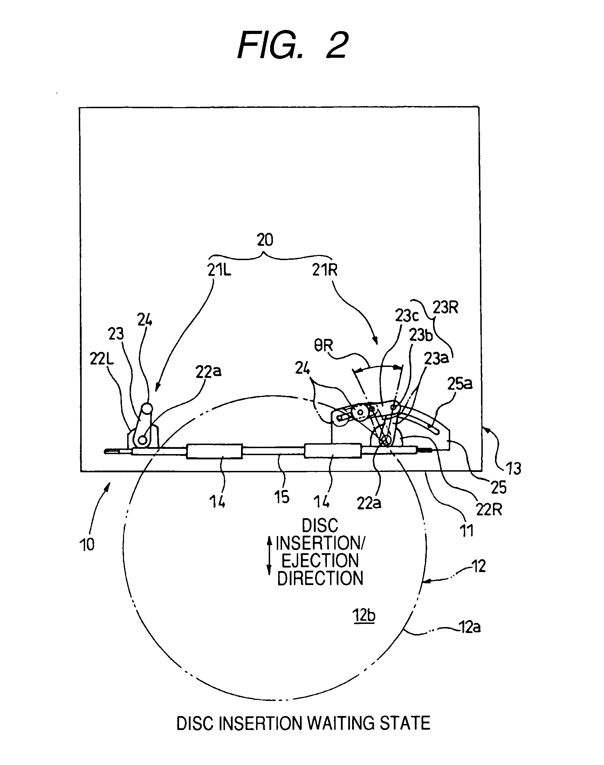

Fig. 2 shows a sectional view taken in the line II-II in Fig. 1, of the optical disc device 10 according to the first embodiment of the invention, built in the car audio apparatus 1.
As shown in Fig. 2, the optical disc device 10 includes a body 13, an insertion/ejection slot 11, and insertion/ejection rollers 14 and 14. An optical disc 12 where information has been recorded can be stored in the inside of the body 13. The optical disc 12 can be inserted/ejected into/from the inside of the body 13 through the insertion/ejection slot 11. The insertion/ejection rollers 14 and 14 are a pair of rollers which are provided in the inside of the body 13 and which rotate while holding the optical disc 12 so that the rollers can convey the optical disc 12. Circumferential edge sensing units 20 for sensing a circumferential edge 12a of the optical disc 12 are provided in the inside of the body 13.

A reproducing mechanism not shown but provided for playing back the optical disc 12 inserted through the insertion/ejection slot 11 is provided in the inside of the body 13. In the case of a multi-disc loading type for storing a plurality of optical discs 12 and selectively playing back one of the optical discs 12, a plurality of trays not shown but provided for storing optical discs 12 inserted through the insertion/ejection slot 11 are provided to be up/down movable and located desirably in positions such as a storage/ejection position and a reproducing position.
In this case, a button 6 as a loading start operation means provided in the front panel 4 (see Fig. 1) is pushed for inserting the optical discs 12 sequentially.

A cover 11a which is closed before and after insertion of an optical disc 12 is provided in the insertion/ejection slot 11 in order to prevent dust etc. from entering the inside of the body 13 through the insertion/ejection slot 11.
The pair of insertion/ejection rollers 14 and 14 are fixed to a shaft 15 at a predetermined interval. The shaft 15 is driven to rotate forward/backward by a driving means not shown but operated by control of the control portion 5. Incidentally, in order to hold an optical disc 12 while pressing the optical disc 12 against the insertion/ejection rollers 14, free rollers not shown are provided rotatably below the pair of insertion/ejection rollers 14 and 14 (on the back side perpendicularly to the paper in Fig. 2) while a narrower gap than the thickness of the optical disc 12 is kept between the insertion/ejection rollers 14 and the free rollers.
Accordingly, the shaft 15 is driven to rotate by the driving means so that the optical disc 12 is inserted/ejected by cooperation between the pair of insertion/ejection rollers 14 and 14 and the free rollers.

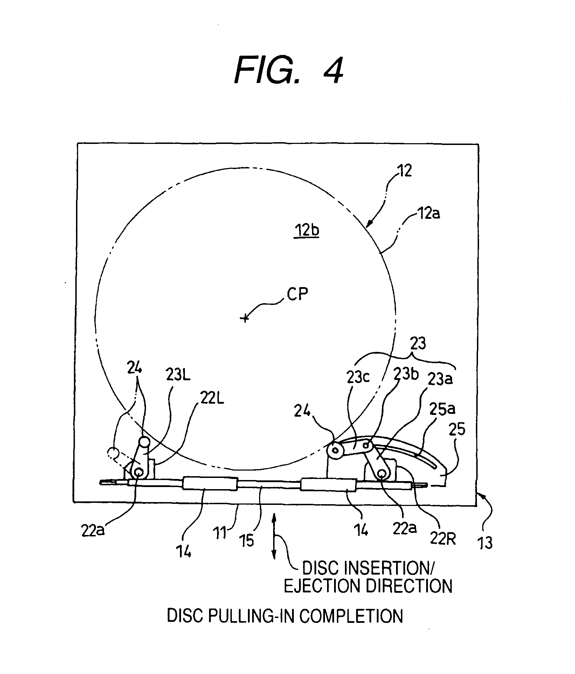

The circumferential edge sensing unit 20 are disposed between a center CP of a storage place for storing an optical disc 12 in the inside of the body 13 (see Fig. 4) and the insertion/ejection slot 11. The circumferential edge sensing unit 20 are a pair of mechanical sensors which can come into contact with a circumferential edge 12a of an optical disc 12 and which are provided along a direction crossing an insertion/ejection direction of the optical disc.
That is, as shown in Fig. 2, circumferential edge sensors 21L and 21R are provided on both (left and right) sides of the pair of insertion/ejection rollers 14 and 14 in the optical disc insertion/ejection directions (designated by arrows in Fig. 2) and in the inside of the body 13. The two circumferential edge sensors 21L and 21R sense the circumferential edge 12a of the optical disc 12.

Here, each circumferential edge sensor 21L, 21R has a pivot type position transducer 22L, 22R, and an arm 23L, 23R. In the pivot type position transducer 22L or 22R, a pivot 22a is disposed perpendicularly to an optical disc surface 12b of a stored optical disc 12 (perpendicularly to the paper in Fig. 2). The arm 23L or 23R is provided on the pivot 22a so that the arm can come into contact with a circumferential edge 12a of the optical disc 12. A detection roller 24 coming into contact with the circumferential edge 12a of the optical disc 12 is provided rotatably in a front end of each arm 23L, 23R. Urging means such springs always urge the two arms 23L and 23R in directions in which the detection rollers 24 are pressed against the circumferential edge 12a of the optical disc 12.
Accordingly, the detection rollers 24 come into contact with the circumferential edge 12a of the optical disc 12 due to insertion/ejection of the optical disc 12 to thereby rotate the arms 23L and 23R on the pivots 22a. The pivot type position transducers 22L and 22R output angles θL and θR of rotation with respect to initial positions of the arms 23L and 23R, as resistance value changes or current/voltage changes based on the rotation of the arms 23L and 23R, to the control portion.

Here, as shown in Fig. 2, in the right circumferential edge sensor 21R, the arm 23R has a first arm 23a attached to the pivot 22a of the pivot type position transducer 22R, and a second arm 23c which is connected rotatably to a front end of the first arm 23a by a hinge 23b which is a bendable portion.
A guide plate 25 is provided in parallel with the optical disc surface 12b and below the first arm 23a and the second arm 23c. The guide plate 25A is provided with a guide groove 25a.

For example, a lower end portion of a rotation shaft of the detection roller 24 or a protrusion or the like provided separately protrudes from a lower surface of the second arm 23c so as to be fitted into the guide groove 25a of the guide plate 25.
Accordingly, the detection roller 24 can move only along the guide groove 25a, so that the first arm 23a and the second arm 23c rotate on the pivot 22a of the pivot type position transducer 22R in the condition that the first arm 23a and the second arm 23c are bent in the hinge 23b.
Incidentally, a state in which the detection roller 24 is located in a right end of the guide groove 25a in Fig. 2 is an initial state. The detection roller 24 is always urged to be restored to this initial state.
Similarly, in the left circumferential edge sensor 21L, the position shown in Fig. 2 is an initial position. The detection roller 24 and the arm 23L are always urged to be restored to the position.

Next, the kind and state of an optical disc 12 sensed by the circumferential edge sensing unit 20 will be described with reference to Figs. 2 to 8.
Fig. 2 shows an optical disc insertion waiting state before the optical disc 12 is inserted to the reproducing position. In this state, for example, the optical disc 12 inserted through the insertion/ejection slot 11 so as to begin to be inserted into the inside of the body 13 by the insertion/ejection rollers 14 comes into contact with only the detection roller 24 of the right circumferential edge sensor 21R to rotate the right arm 23R (sensed angle = θR). Incidentally, the positions of the detection roller 24 and the arm 23R indicated by the chain double-dashed line in Fig. 2 designate initial positions. The optical disc 12 has not come into contact with the detection roller 24 of the left circumferential edge sensor 21L yet, so that the arm 23L has not rotated yet but is still in the initial position. That is, the sensed angle θL is zero.
Incidentally, this state is also applied to a state in the middle of ejection of the optical disc 12 from the inside of the body 13.

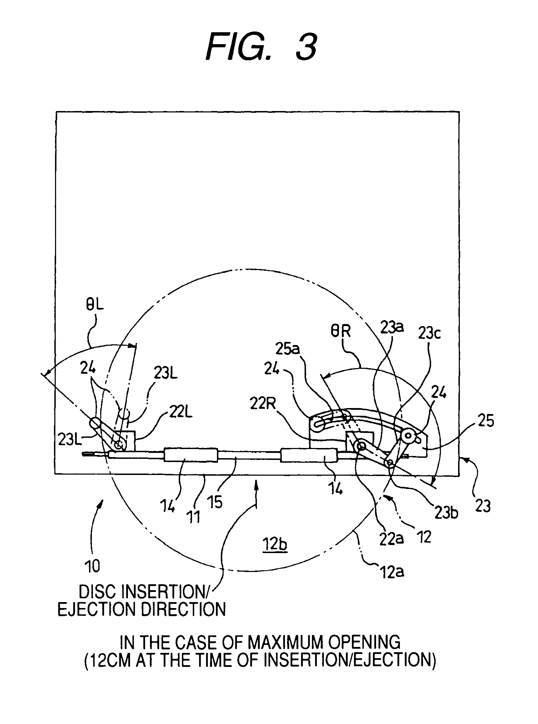

Fig. 3 shows a state in which a maximum diameter in an optical disc 12 with an outer diameter of 12cm is detected. That is, based on the fact that the sum of the sensed angles θL and θR increases up to this state and then starts to decrease, it is understood that the maximum value can be sensed from the sensed angles θL and θR. As a result, it is found that the outer diameter of the optical disc 12 is equivalent to 12cm.
Here, the reason why the outer diameter of the optical disc 12 is expressed as equivalent to 12cm is that it is important to find that the inserted optical disc 12 is a 12cm optical disc regardless of whether the detected outer diameter of the optical disc 12 is exactly 12cm or not.

Fig. 4 shows a state in which the optical disc 12 is pulled into the reproducing position normally and then the pulling-in is completed. In this case, the arms 23L and 23R of the left and right circumferential edge sensors 21L and 21R are restored to their initial positions. The sensed angles θL and θR are both zero.
In this state, rotation of the insertion/ejection rollers 14 is stopped and the optical disc 12 is played back or stored.

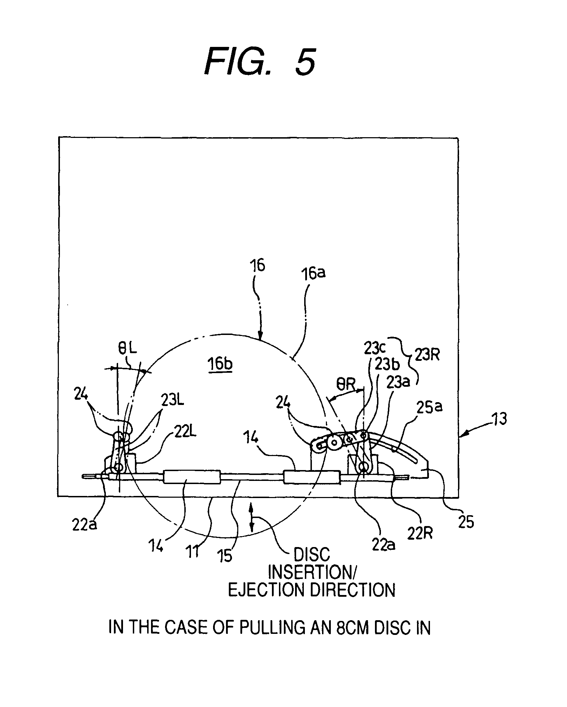

Fig. 5 shows a state in which an 8cm optical disc 16 is inserted. The state shown in Fig. 5 shows a state in which the maximum diameter of the 8cm optical disc 16 is sensed. After that, the sensed angles θL and θR start to decrease.
From the sensed angles θL and θR, the fact that the maximum diameter of the optical disc is equivalent to 8cm can be sensed. In this case, the control portion 5 decides that the inserted optical disc is not a proper optical disc, so that the control portion 5 rotates the insertion/ejection rollers 14 backward to eject the optical disc 16.

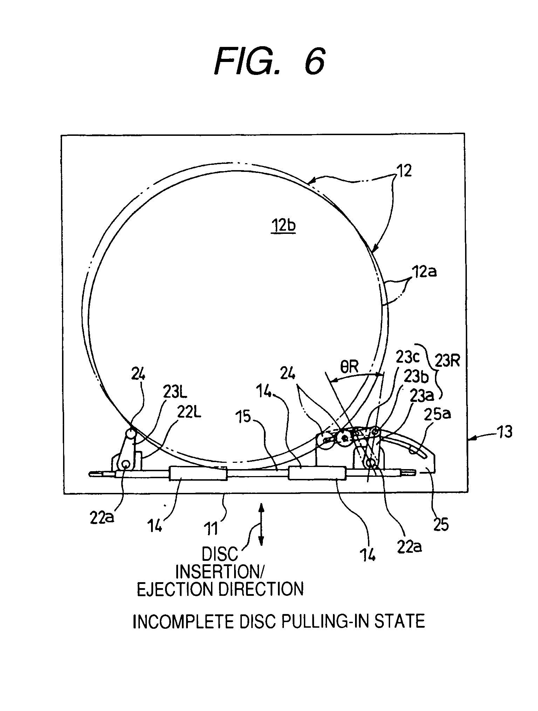

Fig. 6 shows the case where insertion of a 12cm optical disc 12 is incomplete. In this case, the optical disc 12 is not inserted to the rearmost side but shifted to the front (lower part in Fig. 6), compared with the complete insertion state (see Fig. 4). Accordingly, for example, the sensed angle θL becomes zero because the detection roller 24 in the left circumferential edge sensor 21L is restored to the initial position, whereas the sensed angle θR is not zero because the detection roller 24 in the right circumferential edge sensor 21R is not restored to the initial position. In the case where the sensed angle θR is still not zero even after a predetermined time has lapsed in this state, the control portion 5 decides that abnormality has occurred, so that the control 5 rotates the insertion/ejection rollers 14 backward to eject the optical disc 12.

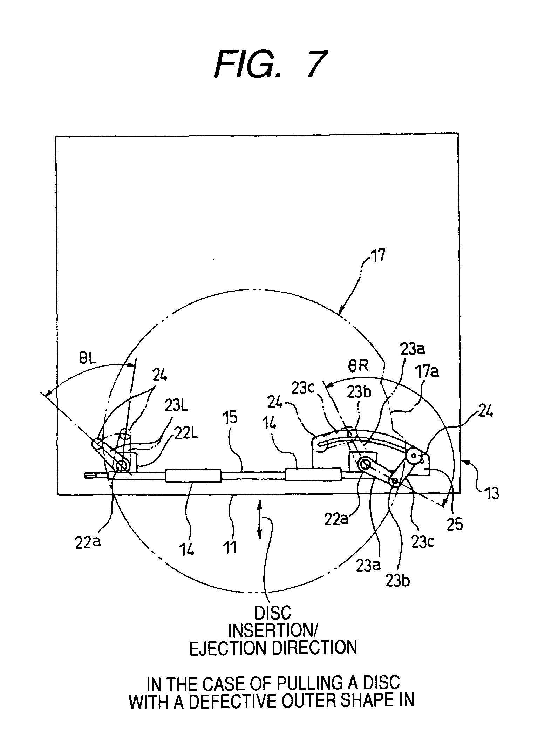

Fig. 7 shows a state in which an optical disc 17 having a defect in its outer shape is inserted. When, for example, there is a missing part 17a, the detection roller 24 moves along the missing part 17a. In this case, the sensed angle θR increases/decreases, so that decision is made that the optical disc 17 is not a normal optical disc 12.
In this case, the control portion 5 decides that the inserted optical disc is not a proper optical disc, so that the control portion 5 rotates the insertion/ejection rollers 14 backward to eject the optical disc 17. In the case of an optical disc with a variant shape such as a heart shape, the variant shape optical disc can be sensed and ejected in the same manner as described above.
In Fig. 7, description has been given to the case where the missing part 17a on the right side of the optical disc 17 is sensed by the right circumferential edge sensor 21R. When there is a missing part 17a on the left side of the optical disc 17, it is a matter of course that the missing part 17a can be sensed from increase/decrease in the sensed angle θL sensed by the left circumferential edge sensor 21L.

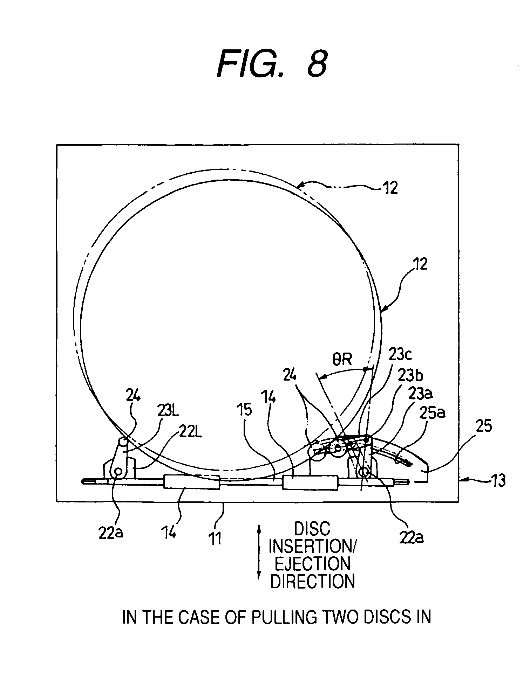

Fig. 8 shows a state in which two optical discs 12 and 12 are inserted. In this case, one optical disc 12 is pulled into the reproducing position completely, while the other optical disc 12 has not reached the reproducing position. Therefore, at least one of the detection rollers 24 of the left and right circumferential edge sensors 21L and 21R is not restored to the initial position.
For this reason, a sensed angle is given from at least one of the circumferential edge sensors 21L and 21R. Also in this case, the control portion 5 decides that abnormality has occurred, so that the control portion 5 rotates the insertion/ejection rollers 14 backward to eject the two optical discs 12 and 12.

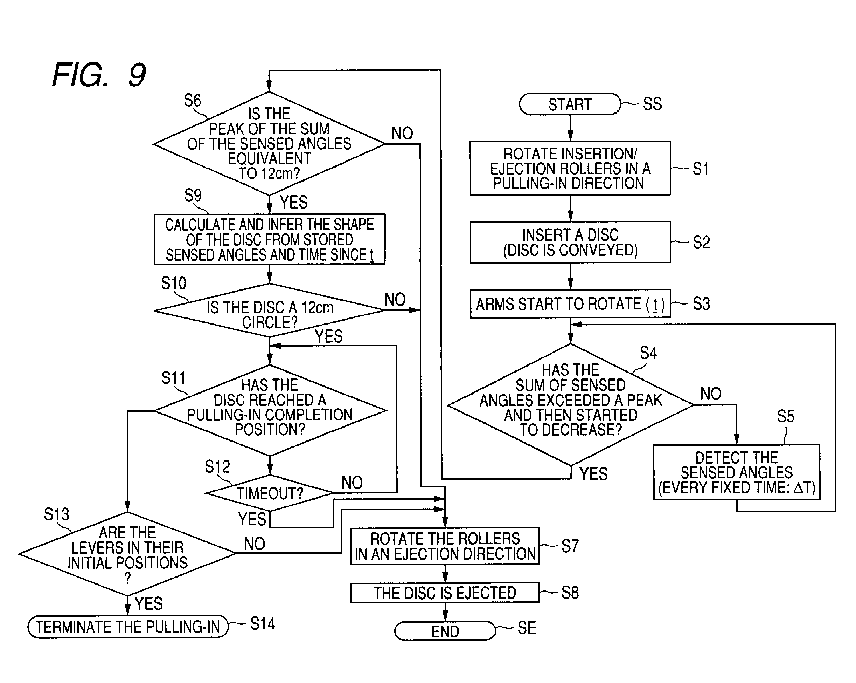

Next, an optical disc shape detection operation will be described based on a flow chart of Fig. 9.
When, for example, the button 6 for a storage start operation is pushed or the cover 11a of the insertion/ejection slot 11 is pushed by an optical disc 12 after start (step SS), the insertion/ejection rollers 14 are rotated in a pulling-in direction (step S1). In this state, one optical disc 12 is inserted through the insertion/ejection slot 11 (step S2).
Thus, the optical disc 12 is pulled into the inside of the optical disc device 10 and abuts on the detection rollers 24 of the arms 23L and 23R of the left and right circumferential edge sensors 21L and 21R to thereby rotate the two arms 23L and 23R (step S3).
Sensed angles θL and θR of the pivot type position transducers 21L and 22R generated in accordance with quantities of rotation of the two arms 23L and 23R are transmitted to the control portion 5. The control portion 5 judges whether the sum of the sensed angles θL and θR from the two arms 23L and 23R has exceeded a peak to start to decrease or not (step S4).

In the case where the sum of the sensed angles θL and θR from the two pivot type position transducers 22L and 22R has not started to decrease yet, the sensed angles θL and θR are stored at intervals of a predetermined time Δt (step S5). Then, the routine of process goes back to the step S4 to monitor whether the sum of the sensed angles θL and θR has exceeded the peak or not.
When decision is made in the step S4 that the sum of the sensed angles θL and θR has exceeded the peak and then started to decrease, judgment is made as to whether the peak of the sum of the sensed angles θL and θR from the two pivot type position transducers 22L and 22R is equivalent to 12cm or not (step S6).
As described above, it is important to find whether the optical disc 12 can be regarded as a 12cm optical disc or not, regardless of whether the peak is exactly 12cm or not. Accordingly, judgment is made here as to whether the peak is equivalent to 12cm or not.
In the case where the peak is not equivalent to 12cm, decision is made that the optical disc is not a 12cm optical disc but, for example, an 8cm optical disc (see Fig. 5), so that the insertion/ejection rollers 14 are rotated backward in an ejection direction (step S7) to eject the optical disc 12 (step 58). Then, the process is terminated (step SE).

On the other hand, in the case where decision is made in the step S6 that the peak of the sum of the sensed angles θL and θR from the two pivot type position transducers 21L and 21R is equivalent to 12cm, the shape of the optical disc 12 is calculated and inferred from the stored sensed angles θL and θR and a time T0 since the arms 23L and 23R start to rotate (step S9).
Judgment is made based on this result, as to whether the shape of the optical disc 12 is a circle with an outer diameter of 12cm (step S10). When decision is made that the shape of the optical disc 12 is not a circle with an outer diameter of 12cm, for example, the control portion 5 decides that the optical disc is an optical disc with a missing part (see Fig. 7), an optical disc with a variant shape, or the like, so that the control portion 5 rotates the insertion/ejection rollers 14 backward in the ejection direction (step S7) to eject the optical disc 12 (step S8). Then, the process is terminated (Step SE).

On the other hand, when decision is made in the step S10 that the optical disc 12 is a 12cm optical disc, judgment is made as to whether the optical disc 12 has reached a pulling-in completion position or not (step S11). When the optical disc 12 has not reached the pulling-in completion position, a time since the optical disc 12 is inserted is counted so that judgment is made as to whether a predetermined time has elapsed or not (step S12).
When the predetermined time has elapsed (timeout), decision is made that, for example, the optical disc 12 is pulled in incompletely (see Fig. 6), so that the routine of process goes to the step S7 to rotate the insertion/ejection rollers 14 in the ejection direction to thereby eject the optical disc 12 (step S8). Then, the process is terminated (step SE).
When the predetermined time has not elapsed, the routine of process goes back to the step S11 to monitor whether the optical disc 12 has reached the pulling-in completion position or not, while the insertion/ejection rollers 14 are rotated in the pulling-in direction continuously.

When decision is made in the step S11 that the optical disc 12 has reached the pulling-in completion position, judgment is made as to whether the arms 23L and 23R have been restored to their initial positions (step S13). When the arms 23L and 23R have been restored to their initial positions, decision is made that the optical disc 12 is inserted normally as shown in Fig. 4, so that the pulling-in is terminated (step S14).
On the other hand, when the arms 23L and 23R have not been restored to their initial positions, decision is made that abnormality such as insertion of two optical discs has occurred as shown in Fig. 8, so that the routine of process goes to the step S7 to rotate the insertion/ejection rollers 14 in the ejection direction to thereby eject the optical discs 12 (step S8). Then, the process is terminated (step SE).

According to the optical disc device 10 in the first embodiment of the invention, configuration is made as described above so that the pivot type position transducers 22L and 22R which are mechanical sensors are used as the circumferential edge sensing unit 20 for sensing a circumferential edge 12a of an optical disc 12. Accordingly, the circumferential edge 12a of the optical disc 12 can be sensed continuously by a simple mechanism, so that the outer diameter, shape, and insertion state of the inserted optical disc 12 can be sensed easily.

The above description has been given to the case where the optical disc device used exclusively for 12cm optical disc is taken as an example. Therefore, when the optical disc device according to the first embodiment senses insertion of another optical disc than a 12cm optical disc, the optical disc device performs control to proceed to an ejection operation for ejecting the optical disc. However, the invention may be applied to a device for recording/playing back not only a 12cm optical disc but also an 8cm optical disc or a variant shape optical disc. On that occasion, when, for example, the device is an optical disc device in which a tray for 8cm optical disc or variant shape optical disc is provided separately from a tray for 12cm optical disc, as next control after an 8cm optical disc or a variant shape optical disc has been detected, the optical disc device may perform control to proceed to a transferring operation to transfer the optical disc to the tray for 8cm optical disc or variant shape optical disc.

In the aforementioned first embodiment, one arm 23L is used for the left circumferential edge sensor 21L whereas the arm 23R in which two arms 23a and 23c are bendably connected by the hinge 23b is used for the right circumferential edge sensor 21R. However, one arm member may be used for each of the two circumferential edge sensors 21L and 21R so that the circumferential edge sensing unit can be simplified. Or a bendable arm member may be used for each of the two circumferential edge sensors 21L and 21R so that the device can be made more compact.

Although the aforementioned description has been made on the case where the circumferential edge sensing unit 20 include the pivot type position transducers 22L and 22R and the arms 23L and 23R, other circumferential edge sensing unit may be used.

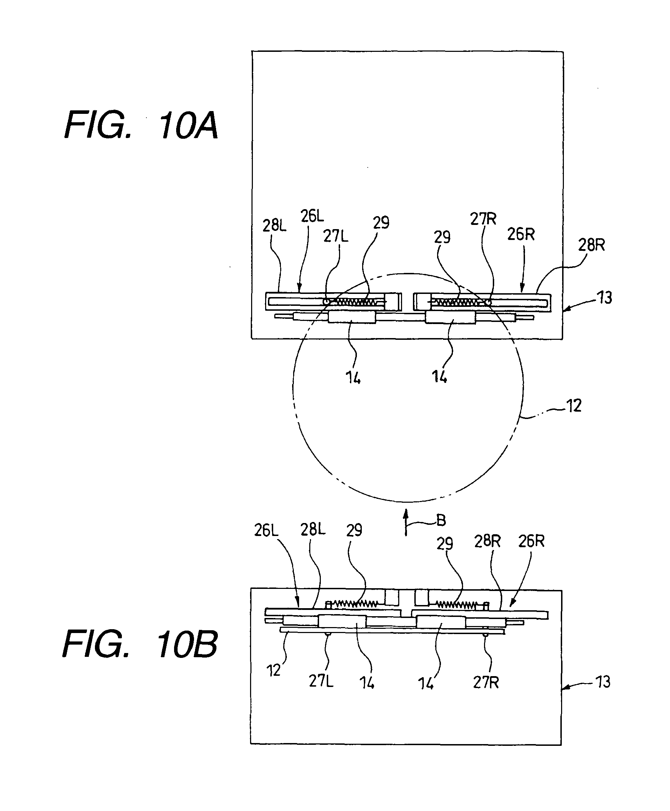

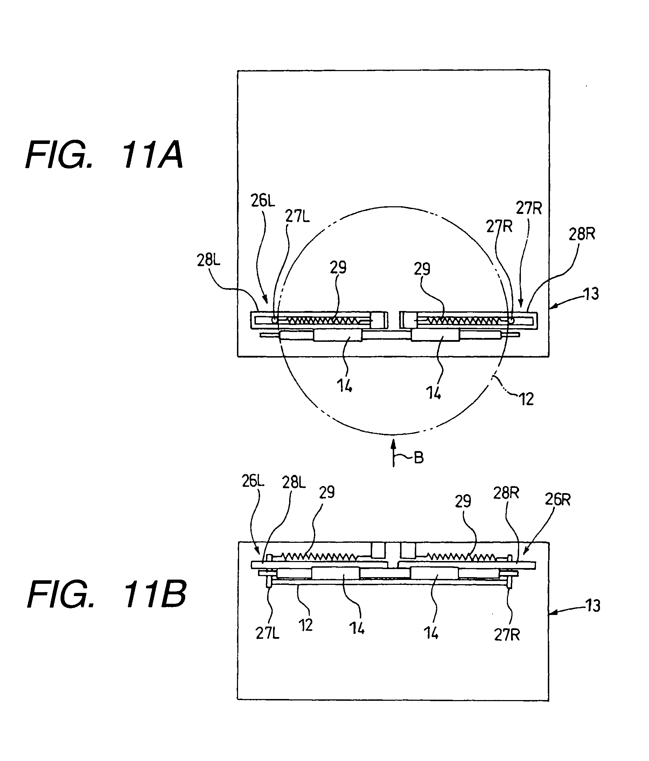

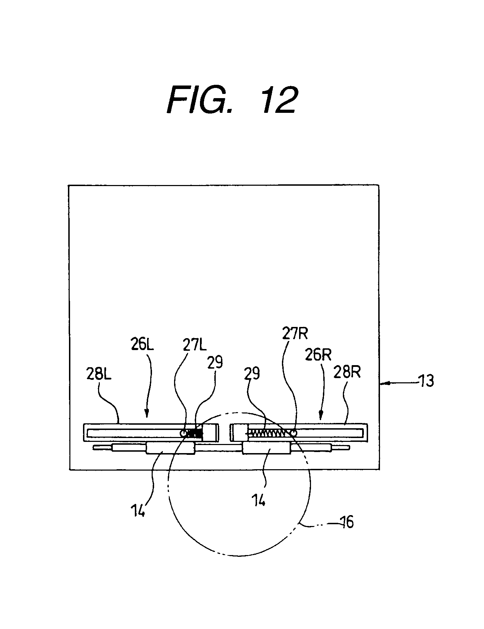

As another form of the mechanical circumferential edge sensing units, for example, linear type position transducers 26L and 26R shown in Figs. 10 to 12 can be used. Incidentally, parts common with those in the aforementioned first embodiment are referred to by the same numerals so that duplicate description thereof will be omitted.
The linear type position transducers 26L and 26R have slide resistances 28L and 28R provided with arms 27L and 27R as detector elements. The arms 27L and 27R abut on a circumferential edge of an optical disc 12 so that the arms 27L and 27R can slide linearly. The arms 27L and 27R are urged by a springs 29 respectively, so that each of the arms 27L and 27R is directed to an origin position in the center side.
Accordingly, when an optical disc 12 is inserted, the arms 27L and 27R in the center portion are pushed and expanded leftward and rightward so as to be able to detect an outer diameter (12cm in this case) which is the maximum width of the optical disc 12, as shown in Fig. 11. Similarly, when the maximum interval between the two arms 27L and 27R is 8cm, an 8cm optical disc 16 is sensed, as shown in Fig. 12.

Alternatively, as another system, a rotary encoder for outputting a pulse whenever a shaft rotates a predetermined quantity may be used, or photosensors may be provided continuously in a line and over a whole width so that a circumferential edge 12a of an optical disc 12 can be sensed when the inserted optical disc blocks detection light emitted from the light-emitting portions, with a result that the outer diameter and shape of the optical disc 12 can be sensed.

Next, an optical disc device according to a second embodiment of the invention will be described with reference to the drawings.

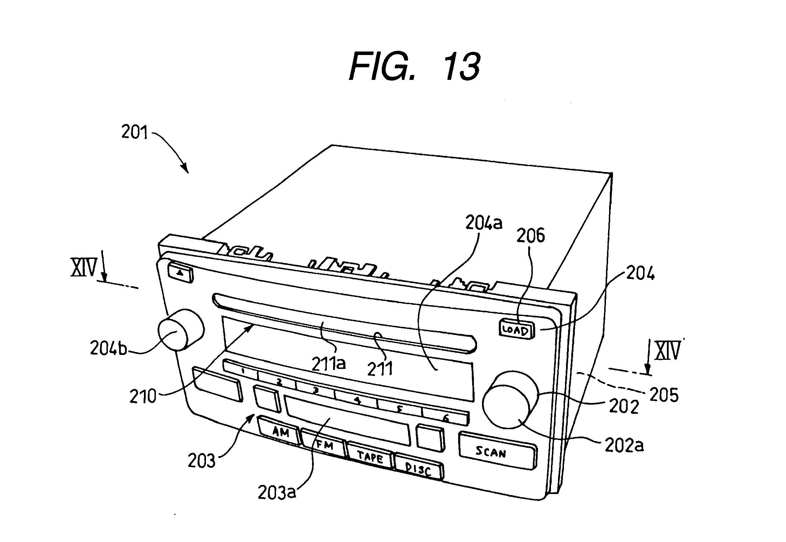

Fig. 13 shows an overall perspective view of a car audio apparatus 201 including a built-in optical disc device 210 according to the second embodiment of the invention. A radio set 202, a cassette tape player 203, etc. as well as the optical disc device 210 are built in the car audio apparatus 201.
The optical disc device 210 reads and reproduces information from an optical disc or records information onto an optical disc.
In a front panel 204, an optical disc insertion/ejection slot 211 in the optical disc device 210, a radio tuning knob 202a, a cassette tape insertion slot 203a, a load button 206, etc., are provided in addition to a display portion 204a and a power/volume knob 204b used in common to all functions. The load button 206 serves as a loading start operation unit for starting a loading operation to load optical discs 212 into the inside of a body 213 sequentially. A control portion 205 for controlling the respective functions of the radio set 202, the cassette tape player 203, the optical disc device 210, etc. is provided internally.

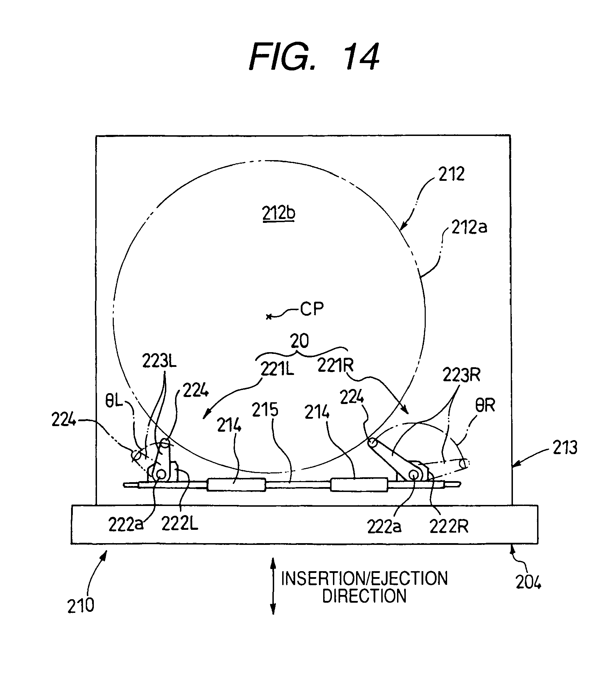

Fig. 14 shows a sectional view taken on the line XIV-XIV in Fig. 13, of the optical disc device 210 according to the embodiment of the invention, built in the car audio apparatus 201.
As shown in Fig. 14, the optical disc device 210 includes the body 213, the insertion/ejection slot 211 (see Fig. 13), insertion/ejection rollers 214 and 214, and the aforementioned load button 206. An optical disc 212 in which information has been recorded can be loaded in the inside of the body 213. The optical disc 212 can be inserted/ejected into/from the inside of the body 213 through the insertion/ejection slot 211. The insertion/ejection rollers 214 and 214 are a pair of rollers which are provided in the inside of the body 213 and which rotate to perform conveyance. Circumferential edge sensing units 220 for sensing a circumferential edge 212a of the optical disc 212 are provided in the inside of the body 213.

A reproducing mechanism not shown but provided for playing back an optical disc 212 inserted through the insertion/ejection slot 211 is provided in the inside of the body 213. A plurality of trays not shown but provided for sequentially loading optical discs 212 inserted through the insertion/ejection slot 211 are provided to be up/down movable and located desirably in positions such as a loading/ejection position and a reproducing position.
When the load button 206 which is a loading start operation unit provided in the front panel 204 is pushed for loading optical discs 212, the control portion 205 rotates the insertion/ejection rollers 214 in an insertion direction of each optical disc 212, so that the optical discs 212 are then inserted and loaded sequentially.

A cover 211a (see Fig. 13) closed before and after insertion of each optical disc 212 is provided in the insertion/ejection slot 211 so that dust etc. is prevented from entering the inside of the body 213 through the insertion/ejection slot 211.
The pair of insertion/ejection rollers 214 and 214 are provided in a front portion in the inside of the body 213, e.g. just near the back of the front panel 204. Incidentally, the insertion/ejection rollers 214 and 214 are fixed to a shaft 215 at a predetermined interval. The shaft 215 is driven to rotate forward/backward by a driving unit not shown but operated by control of the control portion 205 (see Fig. 13).

In order to hold an optical disc 212 while pressing the optical disc 212 against the insertion/ejection rollers 214, free rollers not shown are provided rotatably below the pair of insertion/ejection rollers 214 and 214 (on the back side perpendicular to the paper in Fig. 14) while a smaller gap than the thickness of the optical disc 212 is kept between the insertion/ejection rollers 214 and the free rollers.
Accordingly, the shaft 215 is driven to rotate by the driving unit so that the optical disc 212 is inserted/ejected by cooperation between the pair of insertion/ejection rollers 294 and 214 and the free rollers.

The circumferential edge sensing unit 220 are disposed between the insertion/ejection slot 211 and a center position CP of the reproducing position where the optical disc 212 in the inside of the body 213 is played back. The circumferential edge sensing unit 220 are a pair of mechanical sensors which can come into contact with a circumferential edge 212a of the optical disc 212 and which are provided along a direction crossing the insertion/ejection direction of the optical disc.
That is, as shown in Fig. 14, circumferential edge sensors 221L and 221R are provided on both (left and right) sides of the pair of insertion/ejection rollers 214 and 214 respectively in the insertion/ejection directions of the optical disc (designated by arrows in Fig. 14) and in the inside of the body 213. The two circumferential edge sensors 221L and 221R sense the circumferential edge 212a of the optical disc 212.

Here, each circumferential edge sensor 221L, 221R has a rotary type position transducer 222L, 222R, and an arm 223L, 223R. For example, the rotary type position transducer 222L or 222R is a mechanical sensor in which a pivot 222a is disposed perpendicularly to an optical disc surface 212b of the loaded optical disc 212 (perpendicularly to the paper in Fig. 14). The arm 223L or 223R is provided on the pivot 222a so that the arm 223L or 223R can come into contact with the circumferential edge 212a of the optical disc 212.
A detection roller 224 coming into contact with the circumferential edge 212a of the optical disc 212 is provided rotatably in a front end of each arm 223L or 223R. Urging units such as springs always urge the two arms 223L and 223R in a direction in which the detection rollers 214 are pressed against the circumferential edge 212a of the optical disc 212.

Accordingly, the detection rollers 224 come into contact with the circumferential edge 212a of the optical disc 212 due to insertion/ejection of the optical disc 212 to rotate the arms 223L and 223R on the pivots 222a respectively.
The rotary type position transducers 222L and 222R output angles θL and θR of rotation with respect to initial positions (designated by solid lines in Fig. 14) of the arms 223L and 223R, as resistance value changes or current or voltage changes based on the rotation of the arms 223L and 223R, to the control portion. When the optical disc 212 is inserted and pulled into the reproducing/loading position completely, the detection rollers 224 of the left and right arms 223L and 223R are separated from the circumferential edge 212a of the optical disc 212. At the same time, when the optical disc 212 is sensed by a complete pulling-in sensing unit not shown, insertion of a next optical disc 212 can be permitted.

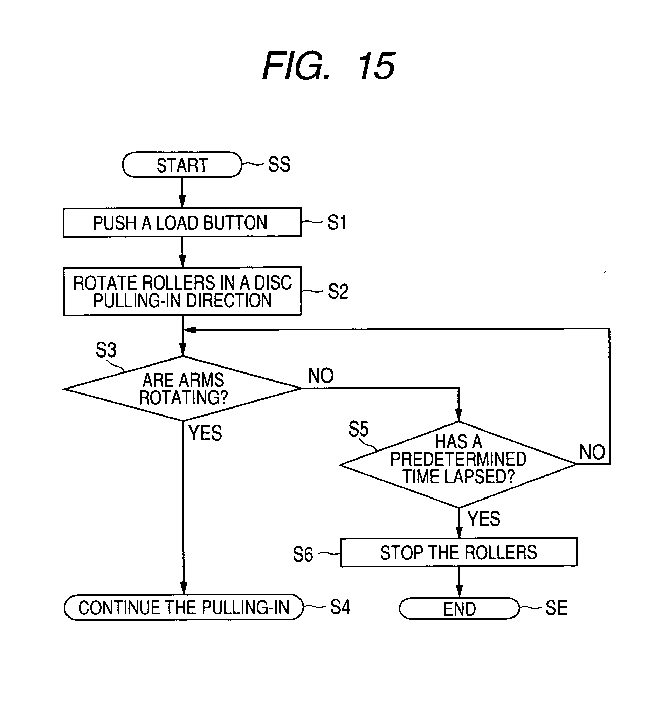

Operation concerned with the optical disc device configured as described above will be described with reference to Fig. 15.
As shown in Fig. 15, when the load button 206 is pushed after start (step SS), start of a loading operation for loading an optical disc 212 is indicated (step S1).
As soon as the load button 206 is pushed, the control portion 205 controls the driving unit to rotate the shaft 215 to thereby rotate the insertion/ejection rollers 214 in a pulling-in direction (step S2) to pull the optical disc 212 into the inside of the body 213. The control portion 205 judges whether the arms 223L and 223R of the circumferential edge sensors 221L and 221R are rotating while coming into contact with a circumferential edge 212a of the optical disc 212 (step S3). When decision is made that the arms 223L and 223R are rotating, pulling-in is continued while the arms 223L and 223R are regarded as being rotating on the pivots 222a of the rotary type position transducers 222L and 222R in accordance with the pulling-in of the optical disc 212 (step S4).

On the other hand, when decision is made in the step S3 that the arms 223L and 223R are not rotating, judgment is made as to whether a predetermined time, for example, since the point of time when the load button 206 is pushed or the point of time when previous decision is made that the arms 223L and 223R are not rotating has been elapsed or not (step S5).
When the predetermined time has not elapsed, the routine of process goes back to the step S3 to monitor whether the arms 223L and 223R are rotating or not.
When decision is made in the step S5 that the predetermined time has elapsed, decision is made that the optical disc 212 is not inserted, so that rotation of the insertion/ejection rollers 214 is stopped (step S6). Then, the optical disc pulling-in operation is completed (step SE).

According to the optical disc device 210 in the embodiment of the invention, configuration is made as described above so that the insertion/ejection rollers 214 start to rotate as soon as the load button 206 as the load start unit is operated. Accordingly, without necessity of provision of expensive photosensors for sensing an inserted optical disc as in the background art, it is possible to provide an optical disc device having an effect that the cost of the optical disc device can be reduced.
According to the invention, a disc can be sensed without use of any photosensor, so that insertion of a 12cm optical disc (or the like) which, for example, has a data area only in a narrow range of a center portion of the disc and an outside area made of a transparent member and which had been ejected before disc storage because of erroneous sensing in the background art can be permitted. In addition, the insertion/ejection rollers 214 are rotated before insertion of a disc 212, so that rapid insertion/loading can be achieved, compared with the case where rotation of the insertion/ejection rollers 214 starts only after the disc 212 is sensed.

The above description has been made on the case where the optical disc device 210 is built in the car audio apparatus 201 provided with the radio set 202, the cassette tape player 203, etc. Besides that, the invention can be also applied to the case where the optical disc device 210 is used singly, or to a disc recording device which can record information on an optical disc.
The above description has been made on the case where a disc recording/reproducing device exclusively for 12cm disc is taken as an example. Therefore, when the disc reproducing device according to the embodiment has sensed insertion of another disc than a 12cm disc, the disc reproducing device performs control to proceed to an ejection operation for ejecting the disc. However, the invention may be applied to a device for recording/playing back not only a 12cm disc but also an 8cm disc or a variant shape disc. On that occasion, when, for example, the device is a disc device in which a tray for 8cm disc or variant shape disc is provided separately from a tray for 12cm disc, as next control after an 8cm disc or a variant shape disc has been detected, the disc device may perform control to proceed to a transferring operation to transfer the disc to the tray for 8cm disc or variant shape disc.

As another form of the mechanical circumferential edge sensing units, for example, linear type position transducers can be used. The linear type position transducers have slide resistances provided with arms as detector elements. The arms abut on a circumferential edge of an optical disc so that the arms can slide linearly. The arms are urged by springs respectively so that each of the arms is directed to an origin position in the center side.
Accordingly, when an optical disc is inserted, the arms in the center portion are pushed and expanded leftward and rightward so as to be capable of detecting an outer diameter (12cm in this case) which is the maximum width of the optical disc. When the largest interval between the two arms is 8cm, an 8cm optical disc 16 is detected in the same manner as described above.

The present application is based on a Japanese patent application (Patent Application No. 2004-146549) filed on May 17, 2004 and a Japanese patent application (Patent Application No. 2004-146558) filed on May 17, 2004, the contents of which are incorporated herein by reference.

### Industrial Applicability

As described above, in the optical disc device according to the invention, the circumferential edge sensing unit for sensing a circumferential edge of an optical disc are provided in the inside of the body, so that there is an effect that the optical disc device can sense the outer diameter, shape and insertion state of an inserted optical disc. Accordingly, the optical disc device according to the invention is useful as an optical disc device (or the like) which is designed to identify the kind and insertion state of an optical disc so that the optical disc is ejected when there is abnormality.

In addition, the optical disc device according to the invention can achieve reduction in cost of the optical disc device and permit insertion of a transparent optical disc. In addition, since the insertion/ejection rollers are rotated before insertion of an optical disc, there is an effect that the optical disc device according to the invention can achieve rapid insertion/loading and lighten a burden on an optical disc or the rollers. Thus, the optical disc device according to the invention is useful as an optical disc device in which a plurality of optical discs are loaded sequentially and laminated in the inside of the body.

## Claims

1. An optical disc device, comprising:
a body which enables to contain an optical disc in an inside thereof;
an insertion/ejection slot through which the optical disc can be inserted/ejected into/from the inside of the body; and
rollers which are provided in the inside of the body and rotate while holding the optical disc so that the rollers can convey the optical disc to the inside of the body,
wherein a circumferential edge sensing unit which senses a circumferential edge of the optical disc is provided in the inside of the body.

2. The optical disc device according to Claim 1, wherein the circumferential edge sensing unit is disposed between the insertion/ejection slot and a center of a storage position where the optical disc is stored in the inside of the body.

3. The optical disc device according to Claim 1, wherein the circumferential edge sensing unit is a mechanical sensor which can come into contact with the circumferential edge of the optical disc.

4. The optical disc device according to Claim 3, wherein a pair of the circumferential edge sensing units are provided in a direction crossing an insertion/ejection direction of the optical disc.

5. The optical disc device according to Claim 3 or 4, wherein the circumferential edge sensing unit includes:
a pivot type position transducer which has a pivot disposed substantially perpendicularly to a disc surface of the contained optical disc; and
an arm which is provided in the pivot type position transducer so that the arm can come into contact with the circumferential edge of the optical disc.

6. The optical disc device according to Claim 5, wherein the circumferential edge sensing unit rotates the pivot while bending a bendable portion provided in the arm which comes into contact with the circumferential edge of the optical disc.

7. The optical disc device according to Claim 3 or 4, wherein the circumferential edge sensing unit includes:
a linear type position transducer which can slide substantially perpendicularly to an insertion/ejection direction of the optical disc to be inserted/ejected; and
an arm which is provided in the linear type position transducer so that the arm can come into contact with the circumferential edge of the optical disc.

8. A disc reproducing device, comprising:
a body which enables to load optical discs in laminate manner in an inside thereof;
an insertion/ejection slot through which each of the optical discs can be inserted/ejected into/from the inside of the body;
a roller which is provided in the inside of the body and rotates so as to convey each of the optical discs to the inside of the body; and
a loading start operation unit which starts a loading operation to load each of the optical discs into the inside of the body sequentially,
wherein the roller starts to rotate when the loading start unit is operated.

9. The optical disc device according to Claim 8, wherein the roller is arranged in a front portion in the inside of the body.
